# EUROPÄISCHE PATENTSCHRIFT

(11) **EP 2 711 331 B1**
(45) Veröffentlichungstag und Bekanntmachung des Hinweises auf die Patenterteilung: **20.05.2015**
(21) Anmeldenummer: 13003659.3
(22) Anmeldetag: 22.07.2013
(51) Int. Cl.: B66C 23/84, B66C 23/94, B66D 5/02, B66D 5/04, F16D 59/00, B66C 23/02, B66C 23/88

(54) **Kran**
Crane
Grue

(30) Priorität: 24.09.2012 DE 202012009167 U
(43) Veröffentlichungstag der Anmeldung: 26.03.2014
(73) Patentinhaber: Liebherr-Werk Biberach GmbH, 88400 Biberach/Riß (DE)
(72) Erfinder: Mayer, Joachim, 88400 Biberach (DE)
(74) Vertreter: Thoma, Michael

(56) Entgegenhaltungen:
- EP-A1- 2 123 590
- EP-B1- 1 422 188
- DE-A1- 2 136 928
- DE-A1- 2 210 806
- DE-A1- 2 337 397
- JP-A- 2010 083 659
- US-A1- 2009 308 827

## Beschreibung

Die vorliegende Erfindung betrifft einen Kran, insbesondere Turmdrehkran, mit einem um eine aufrechte Drehwerksachse drehbaren Ausleger sowie einer Außerbetriebs-Bremse, die Drehbewegungen des Auslegers im Außerbetriebs-Zustand zulässt und abbremst.

Bei Turmdrehkranen, aber auch anderen Krantypen ist der Ausleger um eine aufrechte Drehwerksachse verdrehbar, wobei ein hierzu vorgesehenes Drehwerk einen Drehantrieb beispielsweise in Form eines Elektromotors aufweisen kann, dessen Antriebsbewegung über ein Drehwerksgetriebe beispielsweise in Form eines Planetengetriebes in eine Drehbewegung des Auslegers umgesetzt wird. Bei sog. Obendrehern wird dabei der Ausleger relativ zu dem den Ausleger tragenden Turm verdreht, während bei sog. Untendrehern der gesamte Turm mitsamt dem daran gelagerten Ausleger relativ zum Unterwagen bzw. zur Abstützbasis verdreht wird.

Im Kranbetrieb werden die Drehbewegungen durch entsprechendes Ansteuern des Drehantriebs gesteuert, wobei zum Abbremsen und auch zum rotatorischen Festsetzen in einer bestimmten Drehposition eine Drehwerksbremse vorgesehen ist. Derartige Drehwerksbremsen können üblicherweise aus Sicherheitsgründen derart ausgebildet sein, dass die Bremse beispielsweise durch eine entsprechende Federeinrichtung in ihre bremsende Betriebsstellung vorgespannt ist und durch einen Stellaktor gelüftet werden kann, um die Verdrehbarkeit freizugeben.

Im Nichtbetrieb bzw. im Außerbetriebs-Zustand, wenn der Kran abgeschaltet ist, ist es jedoch wünschenswert, dass sich der Kran verdrehen kann, um sich bei Wind in die zur jeweiligen Windrichtung günstigste Drehstellung ausrichten kann. Da beispielsweise Turmdrehkrane üblicherweise durch ihre Ballastierung gegen Kippbewegungen in der Auslegerebene sehr viel stabiler sind als gegenüber Kippbewegungen quer zu der senkrecht durch den Ausleger gehenden Auslegerebenen, soll sich der Kran bei starkem Wind so ausrichten, dass der Wind von hinten kommt und der Ausleger möglichst parallel zur Windrichtung mit dem Wind ausgerichtet ist, da anderenfalls ein Kippen des Krans drohen würde bzw. der Kran zusätzlich ballastiert werden müsste. Um ein solches selbsttätiges Ausrichten im Wind zu erlauben, ist der Betriebsbremse bzw. Drehwerksbremse ein Windfreistellvorrichtung zugeordnet, die die üblicherweise in ihre bremsende Stellung vorgespannte Bremse lüftet, wenn der Kran außer Betrieb ist. Diese "Feierabends"-Stellung der Drehwerksbremse kann mittels eines händisch betätigbaren Stellhebels eingestellt werden, ggf. aber auch durch einen motorischen Lüftungsantrieb, der den Bremsaktor vor Abstellen des Krans in eine verriegelte Nichtbremsstellung fahren kann. Eine solche Windfreistellvorrichtung für die Drehwerksbremse eine Turmdrehkrans zeigt beispielsweise die Schrift EP 14 22 188 B1.

Die freie Verdrehbarkeit des Krans im Außerbetriebs-Zustand kann jedoch unter ungünstigen Windverhältnissen zu Instabilitäten des Krans aufgrund Selbstrotation führen. Beispielsweise wenn der Kran zwischen zwei Gebäuden steht und nur der Ausleger oder nur der Gegenausleger dem Wind ausgesetzt ist, wird jeweils nur der Ausleger oder der Gegenausleger einseitig vom Wind angeströmt, wodurch der Kran in immer schnellere Rotation versetzt werden kann, da der Kran nicht stehenbleibt, wenn sich der Ausleger aus dem Wind gedreht hat bzw. bevor der Gegenausleger in den Wind gerät. Hierdurch können abwechselnd der Ausleger und der Gegenausleger in den Wind geraten, so dass ein Aufschaukeln dieser zyklischen Windbeaufschlagung zu einer Autorotation des Krans führen kann, die den Kran zu schnell dreht und kippen lässt.

Um eine solche ungewollte Autorotation zu vermeiden, wurde bereits vorgeschlagen, das Drehwerk im Außerbetriebs-Zustand nicht gänzlich ungebremst drehen zu lassen, sondern dem Drehwerk eine Zusatzbremse zuzuordnen, die die Drehbewegung des Krans unter Wind zwar zulässt, jedoch leicht abbremst, um die vorgenannte Autorotationsproblematik zu entschärfen. Beispielsweise wurde angedacht, am Ausgang des Drehwerksgetriebes eine leichte Außerbetriebs-Bremse vorzusehen, die der Krandrehung ein begrenztes Bremsmoment entgegensetzt, welches kleiner ist als das durch Windbeaufschlagung erzeugte Drehmoment, so dass sich der Kran immer noch im Wind ausrichten kann, jedoch nur mit kleiner Drehgeschwindigkeit drehen kann.

Eine solche Zusatzbremse ist jedoch hinsichtlich des Bremsmoments schwierig auszulegen, um für verschiedene Windbedingungen und auch verschiedene Kranstellungen gleichermaßen geeignet zu sein. Beispielsweise kann ein zu hohes Bremsmoment bei noch gemäßigtem Wind dazu führen, dass sich der Kran nicht ordentlich ausrichtet, während dasselbe Bremsmoment bei sehr ungünstigen Windbedingungen mit hohen Windgeschwindigkeiten die genannte Autorotation nicht genügend unterbinden kann. Bei Turmdrehkranen mit wippbarem Ausleger kann zudem auch die Wippstellung, in der der Kran abgestellt wurde, einen Einfluss auf das benötigte Bremsmoment haben.

Die Schrift US 2009/0308827 A1 offenbart einen Kran nach dem Oberbegriff des Anspruchs 1.

Der vorliegenden Erfindung liegt daher die Aufgabe zugrunde, einen verbesserten Kran der eingangs genannten Art zu schaffen, der Nachteile des Standes der Technik vermeidet und Letzteren in vorteilhafter Weise weiterbildet. Insbesondere soll auch für wechselnde, schwierige Windbedingungen und verschiedene Krankonfigurationen beim Abstellen des Krans eine die Stabilität des Krans gefährdende Autorotation sicher unterbunden werden, gleichzeitig aber ein freies Ausrichten des Krans im Wind ermöglicht werden.

Erfindungsgemäß wird die genannte Aufgabe durch einen Kran gemäß Anspruch 1 gelöst. Bevorzugte Ausgestaltungen der Erfindung sind Gegenstand der abhängigen Ansprüche.

Es wird also vorgeschlagen, die Außerbetriebs-Bremse so auszubilden, dass sich das Bremsmoment an die Erfordernisse und die variierenden Außerbetriebs-Zustände anpasst. Sind die Bedingungen so, dass sich das Drehen des Krans zu einer gefährlichen Autorotation aufzuschaukeln droht, wird ein höheres Bremsmoment angelegt. Wenn sich der Kran hingegen nicht ausreichend oder nur langsam in eine bevorzugte Windstellung ausrichtet, wird das Bremsmoment abgeschaltet oder ein nur sehr geringes Bremsmoment angelegt. Erfindungsgemäß ist die Außerbetriebs-Bremse drehgeschwindigkeitsabhängig arbeitend ausgebildet derart, dass das aufgebrachte Bremsmoment bei größerer Krandrehgeschwindigkeit größer ist als bei kleinerer Krandrehgeschwindigkeit. Dreht sich der Kran gar nicht bzw. richtet sich der Kran im Wind zu langsam aus, wird gar nicht oder nur schwächer gebremst, während umgekehrt stärker gebremst wird, wenn sich der Kran zu schnell dreht bzw. sich zu schnell zu drehen beginnt. Hierdurch kann sich der Kran einerseits stets in die günstigste Ausrichtung zum Wind drehen, während andererseits eine sich aufschaukelnde Autorotation unterbunden ist.

Hinsichtlich der Drehzahlabhängigkeit kann die Außerbetriebs-Bremse grundsätzlich verschieden ausgestaltet sein, beispielsweise kann eine gleichmäßige, beispielsweise proportionale Abhängigkeit vorgesehen sein dergestalt, dass mit zunehmender Krandrehgeschwindigkeit das Bremsmoment kontinuierlich größer wird. Alternativ kann auch ein stufenweise anwachsendes Bremsmoment vorgesehen werden, insbesondere dergestalt, dass bei einer Krandrehgeschwindigkeit, die kleiner ist als eine vorbestimmte Grenzgeschwindigkeit, die Außerbetriebs-Bremse kein Bremsmoment oder ein nur sehr kleines Bremsmoment aufbringt, welches bis zum Erreichen der genannten Krangrenzdrehgeschwindigkeit konstant sein kann oder auch sehr leicht ansteigen kann, während bei Überschreiten der genannten vorbestimmten Krandrehgeschwindigkeit ein deutlich größeres und/oder um eine Stufe stärkeres Bremsmoment bereitgestellt wird. In Weiterbildung der Erfindung können auch Mischformen des genannten kontinuierlichen Anstiegs und des genannten stufenweisen Anstiegs vorgesehen werden, beispielsweise dergestalt, dass bis zu einer vorbestimmten Krandrehgeschwindigkeit kein oder ein nur sehr kleines, beispielsweise Bremsmoment aufgebracht wird, während beim Überschreiten der genannten Krandrehgeschwindigkeit dann ein deutlich größeres und mit zunehmender Drehgeschwindigkeit immer weiter ansteigendes Bremsmoment angelegt wird.

In Weiterbildung der Erfindung ist die genannte Außerbetriebs-Bremse stromlos arbeitend ausgebildet und/oder fremdenergiefrei betätigbar. Dies ermöglicht es, dass die Außerbetriebs-Bremse im abgeschalteten Zustand des Krans bzw. in dessen Außerbetriebs-Zustand ohne weitere Energiequellen wie beispielsweise eine Batterie oder einen Netzanschluss betriebsbereit ist bzw. betätigt werden kann.

In Weiterbildung der Erfindung kann die genannte Außerbetriebs-Bremse eine Fliehkraftbremse umfassen, die die Krandrehung in Fliehkräfte umsetzt, welche die Bremse betätigen. Insbesondere kann die Fliehkraftbremse Fliehgewichte umfassen, die durch eine Federeinrichtung in eine nicht angelegte Stellung, insbesondere radial nach innen vorgespannt sind, und mit Bremsbelägen verbunden sind, welche von den Fliehgewichten bei ausreichender Fliehkraft in die bremsende Stellung gedrückt werden.

Durch Einstellung der genannten Vorspanneinrichtung, die die Fliehgewichte in deren Ausgangsstellung hält, kann das Ansprechen der Fliehkraftbremse bzw. die Drehgeschwindigkeit, ab der die Bremse greift, gesteuert werden, wobei die Vorspanneinrichtung insbesondere derart eingestellt sein kann, dass bei langsamen Krandrehungen die Bremse gar nicht anspricht und sich der Kran frei im Wind ausrichten kann. Wird die Vorspannung durch die Fliehkräfte kompensiert, setzt die Bremswirkung ein, wobei mit weiter ansteigender Drehgeschwindigkeit des Krans durch die dann weiter zunehmenden Fliehkräfte die Bremskraft bzw. das Bremsmoment weiter erhöht wird.

Vorteilhafterweise können die Fliehgewichte der Fliehkraftbremse bzw. der damit verbundene Bremsrotor mit dem Antriebsstrang des Drehwerks verbunden werden, welcher sich bei Drehen des Krans mitdreht, während der feststehende Bremsenteil bzw. der Bremsstator, der als Bremstrommel ausgebildet sein kann, an der die Bremsbeläge angreifen, rotatorisch feststehend montiert bzw. festsetzbar ausgebildet sein kann.

In alternativer Weiterbildung der Erfindung kann die Außerbetriebs-Bremse auch nach Art einer Viskokupplung/-bremse ausgebildet sein bzw. eine solche Viskokupplung/-bremse aufweisen. Eine solche Visko- bzw. Flüssigkeitskupplung arbeitet nach hydrodynamischen Prinzip und überträgt Drehmomente zwischen zwei sich relativ zueinander drehenden Teilen auf hydrodynamische Art und Weise. Insbesondere kann eine solche Visko- bzw. Flüssigkeitskupplung einen Lamellenteil umfassen, der in einem Gehäuseteil drehbar aufgenommen ist, welche mit Flüssigkeit befüllt ist, welche durch Relativdrehung der Lamellen zum Gehäuseteil auf die Lamellen drückt, was zur Folge hat, dass mit zunehmender Relativdrehzahl ein zunehmendes Widerstandsmoment erzeugt wird, d.h. Stator und Rotor einer solchen Visko- bzw. Flüssigkeitskupplung lassen sich langsam relativ leicht drehen, während sich schnelleren Drehbewegungen ein immer stärkerer Widerstand entgegensetzt.

In vorteilhafter Weise ist dabei der Lamellenteil der Viskokupplung/-bremse als Rotor ausgebildet bzw. mit dem Antriebsstrang des Drehwerks verbunden, welcher sich bei Krandrehungen mitdreht, so dass die Lamellen sich in Abhängigkeit der Krandrehgeschwindigkeit drehen. Der Gehäuseteil der Viskokupplung/-bremse ist hingegen feststehend angeordnet bzw. rotatorisch festsetzbar. Dementsprechend kann die genannte Wirkung bzw. Drehzahlabhängigkeit genutzt werden, die in der gewünschten Weise schnelleren Krandrehungen ein stärkeres Bremsmoment entgegensetzt als langsamen Krandrehungen.

Die Außerbetriebs-Bremse kann dabei grundsätzlich an verschiedenen Punkten bzw. Abschnitten des Drehwerks-Antriebsstrangs ansetzen bzw. angebunden sein. In Weiterbildung der Erfindung kann die Außerbetriebs-Bremse auf der schnellen Seite eines Drehwerksgetriebes angebunden sein, insbesondere an einen Abschnitt des Antriebsstranges zwischen Antriebsmotor und Getriebeeingangswelle bzw. -rad. Wird ein Planetengetriebe als Drehwerksgetriebe verwendet, kann die genannte Außerbetriebs-Bremse zwischen einem Sonnenrad auf der Eingangsseite des Drehwerksgetriebe und dem Antriebsmotor angebunden sein.

In Weiterbildung der Erfindung ist die genannte Außerbetriebs-Bremse für den Kranbetrieb abschaltbar, um den Drehantrieb im Kranbetrieb nicht zu behindern bzw. dem Drehantrieb bei gewollten Krandrehungen im Kranbetrieb keinen ungewollten Widerstand entgegenzusetzen. Die Deaktivierung der Außerbetriebs-Bremse für den Kranbetrieb kann hierbei grundsätzlich auf verschiedene Art und Weise erfolgen. Wird beispielsweise eine Viskokupplung/-bremse wie zuvor erwähnt verwendet und in den Antriebsstrang zwischen Antriebsmotor und Drehwerksgetriebe eingebaut, können die Deaktivierungsmittel einen Überbrücker umfassen, mittels dessen die genannte Viskokupplung/-bremse überbrückt werden kann, so dass die Antriebsbewegung des Antriebsmotors ohne Beeinträchtigung durch die Viskokupplung/-bremse auf die Ausgangswelle bzw. das Ausgangsrad des Antriebsstrangs gegeben werden kann. Der Überbrücker kann beispielsweise einen schaltbaren Verbinder umfassen, welcher den Lamellenteil mit dem Gehäuseteil der Viskokupplung/-bremse drehfest miteinander verbindet, so dass das Drehmoment direkt und ohne hydrodynamischen Versatz übertragen wird.

Alternativ zu einem solchen Einbau zwischen Antriebsmotor und Drehwerksgetriebe kann die Viskokupplung/-bremse auch nach Art einer Abzweigung beispielsweise über eine Parallelwelle an das Drehwerksgetriebe angebunden werden, wobei in diesem Fall das Gehäuseteil der Viskokupplung/-bremse starr montiert bzw. festsetzbar angeordnet sein kann, während der Rotor bzw. der Lamellenteil über die genannte Parallelwelle an das Drehwerksgetriebe, beispielsweise dessen Sonnenrad angebunden sein kann. Um die Viskokupplung/-bremse für den Kranbetrieb deaktivieren zu können, können die Deaktivierungsmittel Kupplungsmittel umfassen, mittels derer der Lamellenteil bzw. der Rotor vom Drehwerksgetriebe abgekuppelt werden kann. Alternativ oder zusätzlich können die Kupplungsmittel auch dazu verwendet werden, den Gehäuseteil der Viskokupplung/-bremse zu lösen, so dass sich die Viskokupplung im Kranbetrieb frei drehen kann.

Wird als Außerbetriebs-Bremse eine Fliehkraftbremse verwendet, kann diese ebenfalls in den Antriebsstrang zwischen Antriebsmotor und Drehgewerksgetriebe bzw. Drehwerksausgangswelle oder -rad geschaltet werden, wobei in diesem Fall die Deaktivierungsmittel zum Deaktivieren der Außerbetriebs-Bremse für den Kranbetrieb ebenfalls ein Sperrmittel umfassen können, welches die Beweglichkeit der Fliehgewichte bzw. Bremsbeläge sperren bzw. verriegeln kann, so dass diese sich nicht mehr in ihre bremsende Stellung bewegen können. Insbesondere können die Sperrmittel die Fliehgewichte in ihrer vorgespannten Ausgangsstellung festhalten, so dass diese auch unter Fliehkrafteinwirkung nicht mehr nach außen drücken können. Grundsätzlich genügt es aber auch, die Beweglichkeit lediglich so weit zu blockieren, dass kein Bremseingriff mehr erfolgen kann. Die Sperrmittel können hierbei verschieden ausgebildet sein, beispielsweise in Form eines Steckbolzens oder einer Schiebehülse, die die Fliehgewichte in ihrer nicht bremsenden Stellung halten.

Alternativ oder zusätzlich zu einem solchen Blockieren der Fliehgewichte kann die Fliehkraftbremse auch dadurch deaktiviert werden, dass die Bremstrommel weggeschaltet wird. Insbesondere kann die Bremstrommel axial verschieblich gelagert sein, beispielsweise in einer Verzahnung oder in einem Keilwellenprofil drehfest, aber axial verschieblich geführt sein, so dass die Bremstrommel vom Wirkungsbereich der Fliehgewichte und der daran angebrachten Bremsbeläge wegbewegt werden kann, so dass die Fliehgewichte die Bremsbeläge sozusagen in das Leere drücken. Alternativ oder zusätzlich können die Deaktivierungsmittel auch eine Kupplung umfassen, mittels derer die festsetzbare Bremstrommel gelöst werden kann, so dass sie sich beim Anlegen der Bremsbeläge frei mitdrehen kann und keine Bremswirkung mehr entfalten kann.

Alternativ kann auch die genannte Fliehkraftbremse nicht direkt im Antriebsstrang zwischen Antriebsmotor und Drehwerksausgangswelle vorgesehen sein, sondern über eine Abzweigung an den Antriebsstrang angebunden sein. In diesem Fall können die Deaktivierungsmittel wie zuvor für die Viskokupplung/-bremse beschrieben Kupplungsmittel zum Abkuppeln der an den Drehwerks-Antriebsstrang angebundenen Rotors und/oder des festsetzbaren Stators der Fliehkraftbremse umfassen, um entweder die gesamte Fliehkraftkupplung vom Antriebsstrang abzukuppeln oder den feststehenden Bremsstator zu lösen, so dass sich die Fliehkraftbremse bei Bedarf leer mitdrehen kann.

Die genannte Außerbetriebs-Bremse kann in vorteilhafter Weiterbildung der Erfindung zusätzlich zu einer regulären Drehwerks-Betriebsbremse vorgesehen sein, die während des Kranbetriebs dazu genutzt wird, Drehbewegungen des Krans abzubremsen bzw. den Kran in einer bestimmten Drehposition zu halten. Im Gegensatz zu einer solchen Drehwerks-Betriebsbremse kann die Außerbetriebs-Bremse derart beschaffen sein, dass sie den Kran nicht in einer bestimmten Drehposition hält, sondern Drehbewegungen beispielsweise unter Windkraft lediglich abbremst. Dies kann insbesondere dadurch erreicht werden, dass die Außerbetriebs-Bremse nur ein begrenztes Drehmoment aufbringt, welches deutlich kleiner ist als das Drehmoment der Betriebsbremse. Beispielsweise kann die Außerbetriebs-Bremse so ausgelegt sein, dass sie etwa 1/6 bis 2/3, vorzugsweise etwa 40% bis 60% der maximalen Bremskraft der Drehwerks-Betriebsbremse aufbringt. Ist beispielsweise die Drehwerks-Betriebsbremse zur Erzeugung eines Bremsmoments von 80 N m ausgelegt, kann die Außerbetriebs-Bremse zum Aufbringen eines maximalen Bremsmoments - bei den unter Windkraft üblicherweise entstehenden Krandrehgeschwindigkeiten - von etwa 40 N m aufbringen. Je nach Krantyp und Einsatzbedingungen können natürlich auch andere Werte für das Bremsmoment sinnvoll sein, wobei für viele Einsatzbedingungen eine maximale Bremskraft durch die Außerbetriebs-Bremse etwa 50% der maximalen Bremskraft der Drehwerks-Betriebsbremse haben kann.

Die vorgenannten Deaktivierungsmittel zum Deaktivieren der Außerbetriebs-Bremse für den Kranbetrieb können in Weiterbildung der Erfindung eine Handbetätigungsvorrichtung umfassen, welche ein manuelles Deaktivieren und/oder Aktivieren der Außerbetriebs-Bremse ermöglichen. Alternativ oder zusätzlich zu einer solchen Handbetätigungsvorrichtung kann der Außerbetriebs-Bremse ein fremdenergiebetätigbarer Stellaktor zugeordnet sein, mittels dessen das Deaktivieren und/oder Aktivieren der Außerbetriebs-Bremse fremdenergiebetätigt durchgeführt werden kann. Beispielsweise kann ein Elektromotor den vorgenannten Überbrücker zum Überbrücken der Außerbetriebs-Bremse zwischen seiner Überbrückungsstellung und seiner Nichtüberbrückungsstellung hin und her fahren, oder Drehsperrmittel zum Sperren der Drehbarkeit der zueinander verdrehbaren Teile der Außerbetriebs-Bremse in die sperrende Stellung fahren bzw. in die nicht sperrende Stellung fahren, und/oder die vorgenannten Kupplungsmittel zum Abkuppeln der Außerbetriebs-Bremse an den Drehwerksantriebsstrang ein- und auskuppeln.

Die Erfindung wird nachfolgend anhand bevorzugter Ausführungsbeispiele und zugehöriger Zeichnungen näher erläutert. In den Zeichnungen zeigen:
- Fig. 1:: eine perspektivische, ausschnittsweise Darstellung eines Turmdrehkrans nach einer vorteilhaften Ausführung der Erfindung, der als Obendreher ausgebildet ist und ein Drehwerk zum Verdrehen des Auslegers relativ zum Turm aufweist,
- Fig. 2:: eine schematische Prinzipschnittansicht des Drehwerks des Turmdrehkrans aus Fig. 1, wobei der Elektromotor und die diesem zugeordnete Drehwerks-Betriebsbremse sowie das mit dem Antriebsmotor verbundene Drehwerksgetriebe gezeigt sind, wobei die zusätzliche Außerbetriebs-Bremse zwischen Drehwerksgetriebe und Antriebsmotor vorgesehen werden kann,
- Fig. 3:: eine schematische Schnittansicht der in das Drehwerk aus Fig. 2 integrierten Außerbetriebs-Bremse, welche gemäß Fig. 3 als Fliehkraftbremse ausgebildet ist, die einen schaltbaren Bremsring zum Deaktivieren der Außerbetriebs-Bremse umfasst,
- Fig. 4:: eine Schnittansicht einer Außerbetriebs-Bremse in Form einer Fliehkraftbremse nach einer weiteren Ausführung der Erfindung, welche elektrisch mit Hilfe eines Elektromagneten deaktivierbar ist,
- Fig. 5:: eine ausschnittsweise, schematische Schnittansicht einer Außerbetriebs-Bremse in Form einer Fliehkraftbremse nach einer weiteren Ausführung der Erfindung, die eine Bolzenschaltung zum Blockieren der Fliehgewichte aufweist und durch Blockieren der Fliehgewichte deaktivierbar ist,
- Fig. 6:: eine schematische Schnittansicht einer weiteren Außerbetriebs-Bremse in Form einer Viskokupplung/-bremse nach einer weiteren Ausführung der Erfindung, wobei die Viskokupplung/-bremse in den Antriebsstrang zwischen Antriebsmotor und Drehwerksgetriebe integriert ist,
- Fig. 7:: eine schematische Schnittansicht der Viskokupplung/-bremse aus Fig. 6, die den Lamellenteil und den Gehäuseteil der Kupplung und den Weg der Drehmomentübertragung zeigt,

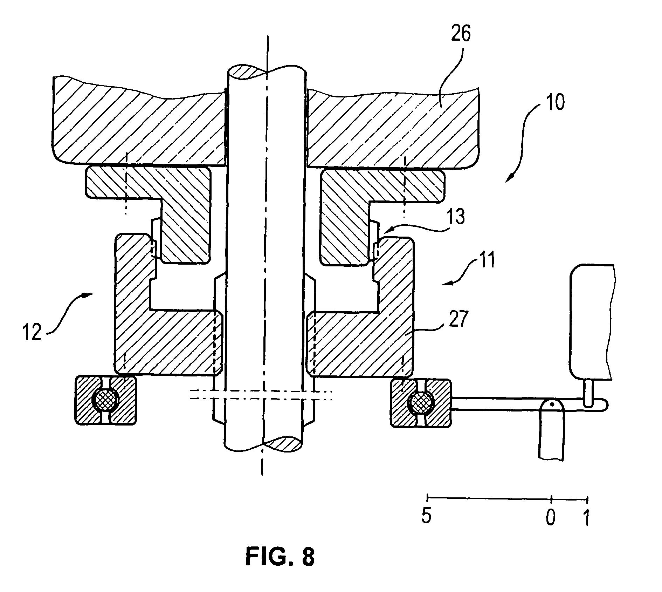

- Fig. 8:: eine ausschnittsweise Schnittansicht der Viskokupplung/-bremse und einer dieser zugeordneten Schaltmuffe zur Überbrückung bzw. zum Sperren der Viskokupplung/-bremse,
- Fig. 9:: eine Schnittansicht einer elektrisch bzw. elektromagnetisch betätigbaren Kupplung zum Zu- und Wegschalten der Viskokupplung/-bremse nach einer weiteren Ausführung der Erfindung, und
- Fig. 10:: eine schematische, teilweise geschnittene Darstellung der Anbindung einer Außerbetriebs-Bremse in Form einer Viskokupplung/-bremse, die nicht direkt in den Antriebsstrang zwischen Antriebsmotor und Drehwerksgetriebe integriert ist, sondern über eine Getriebeabzweigung angebunden ist, wobei die Außerbetriebs-Bremse durch eine Magnetkupplung zuschaltbar bzw. wegschaltbar ist.

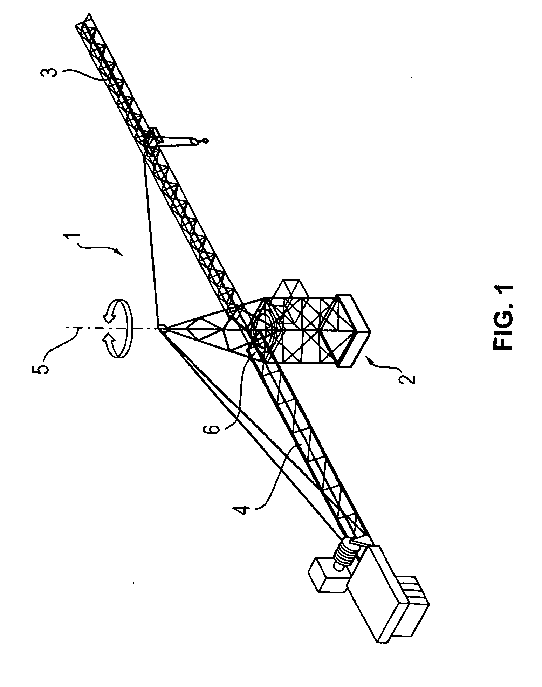

Wie Fig. 1 zeigt, kann der gegenständliche Kran ein als sog. Obendreher ausgebildeter Turmdrehkran 1 sein, dessen Turm 2 einen Ausleger 3 sowie einen Gegenausleger 4 trägt, die sich im Wesentlichen horizontal erstrecken und um die aufrechte Turmachse 5 relativ zum Turm 2 verdrehbar sind. Anstelle der in Fig. 1 gezeigten Krankonfiguration könnte der Turmdrehkran 1 jedoch auch als Untendreher ausgebildet sein und/oder einen wippbaren spitzen Ausleger umfassen und/oder über eine Abspannung zum Turmfuß bzw. Oberwagen hin abgespannt sein.

Um den Ausleger 3 drehen zu können, ist ein Drehwerk 6 vorgesehen, welches in der gezeigten Ausführung am oberen Ende des Turms 2 zwischen dem Ausleger 3 und dem Turm 2 vorgesehen ist und einen Zahnkranz umfassen kann, mit dem ein von einem Antriebsmotor 7 angetriebenes Antriebsrad kämmt.

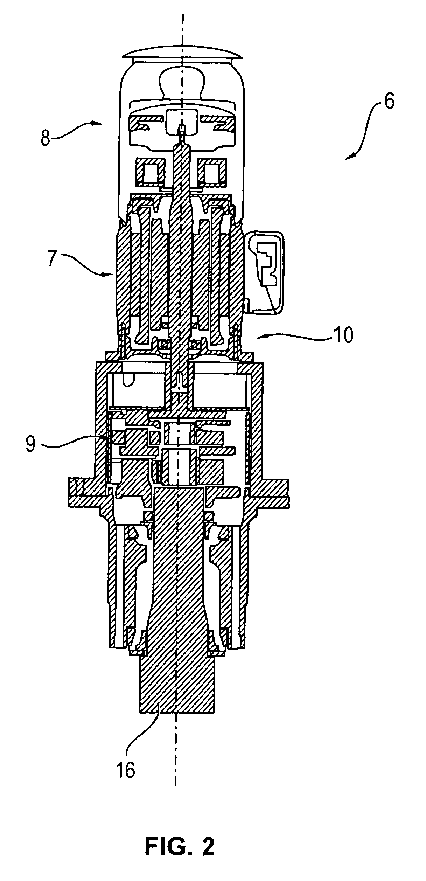

Eine vorteilhafte Ausführung der Antriebseinrichtung des Drehwerks 6 ist in Fig. 2 dargestellt und kann einen vorzugsweise elektrischen Antriebsmotor 7 umfassen, der über ein Drehwerksgetriebe 9 eine Abtriebswelle 16 antreibt, wobei die Anordnung der Drehwerkskomponenten so getroffen sein kann, dass die Abtriebswelle 16 parallel, insbesondere koaxial zur Motorwelle des Antriebsmotors 7 angeordnet ist.

Das genannte Drehwerksgetriebe 9 kann in vorteilhafter Ausführungsform ein Planetengetriebe sein, um die Drehzahl des Antriebsmotors 7 in der gewünschten Weise in eine Drehzahl der Abtriebswelle 16 zu untersetzen/übersetzen.

Um Drehbewegungen des Auslegers 3 im Kranbetrieb abbremsen und/oder eine angefahrene Drehstellung des Auslegers 3 halten zu können, umfasst das Drehwerk 6 eine Drehwerks-Betriebsbremse 8, die vorteilhafterweise auf der Eingangsseite des Drehwerksgetriebes 9 angeordnet sein kann und insbesondere dem Antriebsmotor 7 zugeordnet sein kann, um den Antriebsmotor 7 selbst zu bremsen bzw. in einer bestimmten Position zu halten. Die genannte Betriebsbremse 8 kann beispielsweise, wie dies Fig. 2 zeigt, auf einer dem Drehwerksgetriebe 9 abgewandten Seite des Antriebsmotors 7 angeordnet sein und auf einem durch den Antriebsmotor 7 hindurch verlängerten Antriebswellenstummel sitzen bzw. daran angreifen. In an sich bekannter Weise kann die Betriebsbremse 8 eine Reibscheiben- bzw. Lamellenbremseinrichtung umfassen, die von einer Vorspanneinrichtung in die bremsende Stellung vorgespannt ist und von einem elektrischen Stellaktor beispielsweise in Form eines Elektromagneten gelüftet werden kann, um die Bremse zu lösen.

Zusätzlich zu dieser Betriebsbremse 8 umfasst das Drehwerk 6 eine Außerbetriebs-Bremse 10, die Drehbewegungen des Auslegers 3 im abgeschalteten Außerbetriebs-Zustand des Krans bremsen, jedoch zulassen soll, um ein Selbstausrichten des Krans bzw. seines Auslegers 3 unter Windbelastungen zu ermöglichen. Je nach Ausbildung der Außerbetriebs-Bremse 10 kann die Betriebsbremse 8 hierbei durch eine Windfreistellvorrichtung im Außerbetriebs-Zustand gelüftet, d.h. gelöst werden, oder auch in ihrer vorgespannten Bremsstellung, in der der Antriebsmotor 7 blockiert ist, verbleiben, so dass in diesem Fall auf eine Windfreistellvorrichtung zum Lüften der Betriebsbremse verzichtet werden kann.

Die Außerbetriebs-Bremse 10 kann hierbei vorteilhafterweise zwischen dem Antriebsmotor 7 und dem Drehwerksgetriebe 9 in das Drehwerk 6 integriert sein bzw. an einen Abschnitt des Antriebsstrangs des Drehwerks 6 zwischen Antriebsmotor 7 und Drehwerksgetriebe 9 angebunden sein. Hierdurch kann eine kompakte Anordnung bei gleichzeitiger Ausnutzung der Drehzahlübersetzung und Drehmomentsuntersetzung des Drehwerksgetriebes 9 für die Außerbetriebs-Bremse 10 genutzt werden.

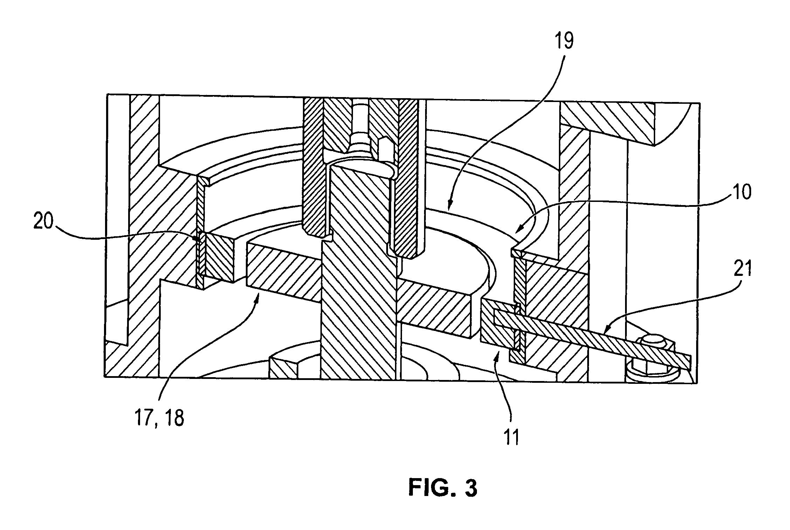

Wie Fig. 3 zeigt, kann die Außerbetriebs-Bremse 10 als Fliehkraftbremse ausgebildet sein, die eine auf der Getriebewelle des Drehwerks 6 sitzende Nabe umfasst, an der radial beweglich Fliehgewichte 17 mit daran befestigten Bremsbelägen 18 gelagert sind, so dass sich die Fliehgewichte 17 zusammen mit den Bremsbelägen 18 bei Drehung der Bremsnabe radial nach außen bewegen. Die Fliehgewichte 17 werden hierbei über eine Vorspanneinrichtung vorzugsweise in Form von einer Federeinrichtung radial nach innen in die nicht bremsende Stellung vorgespannt, so dass die Bremswirkung erst ab einer vorbestimmten Drehzahl einsetzt, wenn die Fliehkräfte groß genug sind, um die Vorspannung zu überwinden.

Die an den Fliehgewichten 17 angebrachten Bremsbeläge 18 wirken dabei mit einem Bremsstator in Form einer Bremstrommel 19 zusammen, die drehfest montiert ist, beispielsweise drehfest mit einem Drehwerksgehäuse 6 verbunden ist.

Um die Fliehkraftbremse für den regulären Kranbetrieb deaktivieren zu können, kann die genannte Bremstrommel 19 axial verstellbar ausgebildet sein, um aus dem Wirkungsbereich der Fliehgewichte 17 bzw. der daran befestigten Bremsbeläge 18 wegbewegt werden zu können. Wie Fig. 3 zeigt, kann die Bremstrommel 19 hierzu über eine Verzahnung 20 drehfest, jedoch axial beweglich am Drehwerksgehäuse 6 gelagert sein. Die Axialverstellung kann hierbei entweder händisch über eine Handbetätigungsvorrichtung 21 erfolgen, die beispielsweise einen in einer schrägen Nut verlaufenden Verstellhebel umfassen kann, und/oder mittels eines Stellantriebs beispielsweise in Form eines elektrischen Spindelantriebs und/oder eines Elektromagneten axial verstellt werden, beispielsweise dergestalt, dass die Bremstrommel 19 mittels einer Vorspanneinrichtung in die bremsende Stellung vorgespannt ist, um im abgeschalteten Außerbetriebs-Zustand des Krans in der richtigen Stellung zu sein, während durch Bestromen eines Elektromagneten die Bremstrommel 19 in die deaktivierte Stellung bewegt werden kann, um im Kranbetrieb gewollte Drehbewegungen nicht zu behindern.

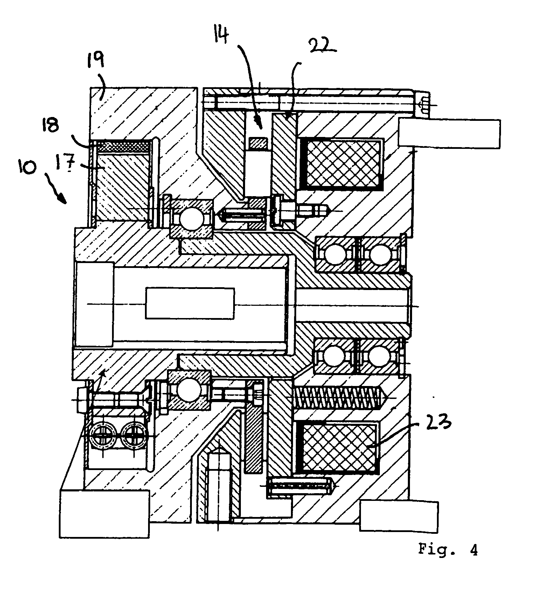

Wie Fig. 4 zeigt, kann eine Deaktivierung der Fliehkraftbremse auch ohne axiale Verstellbarkeit der Bremstrommel 19 erzielt werden, insbesondere dadurch, dass die Bremstrommel 19 an sich drehbar gelagert ist. Die Deaktivierungsmittel 11 umfassen in diesem Fall vorteilhafterweise Kupplungsmittel 14, mittels derer die Bremstrommel 19 drehfest festgesetzt werden kann oder eben gelöst, d.h. drehbar geschaltet werden kann. Die genannten Kupplungsmittel 14 können hierzu beispielsweise eine Axialkupplung umfassen, deren axial verstellbares Kupplungsteil 22 durch eine Vorspannvorrichtung beispielsweise in Form einer Federeinrichtung in die eingekuppelte, d.h. die Bremstrommel 19 sperrende Stellung vorgespannt ist und von einem Stellaktor beispielsweise in Form eines Elektromagneten 23 ausgekuppelt, d.h. in eine die Bremstrommel 19 nicht mehr blockierende Stellung gebracht werden kann.

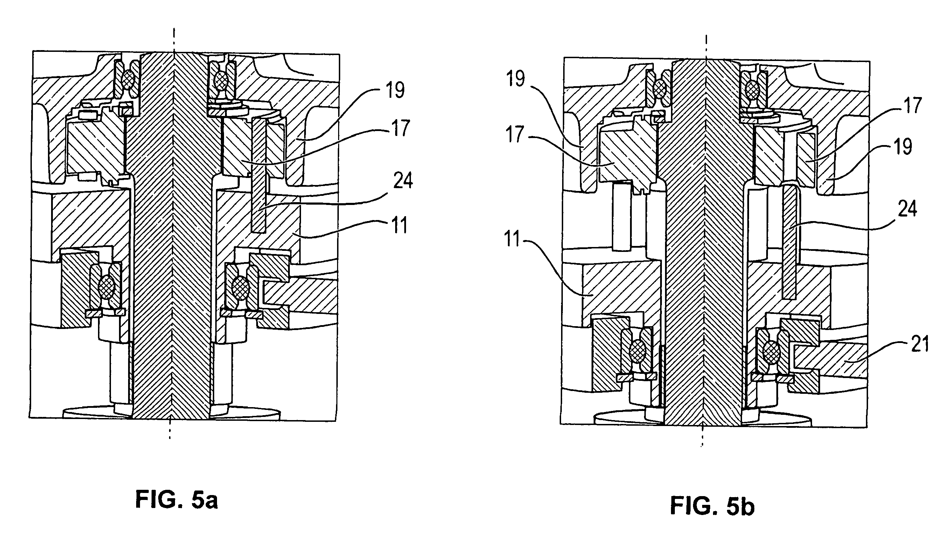

Bei dieser Ausführung können zwar die Fliehgewichte 17 und die daran befestigten Bremsbeläge 18 noch mit der Bremstrommel 19 in Eingriff gelangen. Wenn die Kupplung 14 ausgekuppelt ist, hat dies jedoch keine Bremswirkung mehr, da die Bremstrommel 19 dann nicht mehr festgesetzt ist, sondern sich leer mitdreht. Wie die beiden Ansichten (a) und (b) der Fig. 5 zeigen, kann die Fliehkraftbremse auch dadurch deaktiviert werden, dass die Fliehgewichte 17 in ihrer Bewegung so weit gehemmt werden, dass sie nicht mehr in eine bremsende Stellung getrieben werden können. Die Deaktivierungsmittel 11 können Rückhaltemittel beispielsweise in Form eines Steckbolzens umfassen, die die Fliehgewichte 17 in einer nicht bremsenden Stellung rückhalten können. Wie Fig. 5 (a) zeigt, können die genannten Rückhaltemittel einen axial verstellbaren Bolzen 24 umfassen, der in eine Ausnehmung in einem jeweiligen Fliehgewicht 17 eingreifen kann, so dass sich dieses nicht mehr radial nach außen in die bremsende Stellung bewegen kann. Wird hingegen der genannte Bolzen 24 bzw. die entsprechenden Rückhaltemittel, die auch als Hülse oder dergleichen ausgebildet sein können, gemäß Fig. 5 (b) von den Fliehgewichten 17 außer Eingriff gebracht, indem eine entsprechende Axialverstellung erfolgt, können die Fliehgewichte 17 wieder wie gewohnt arbeiten und bremsen.

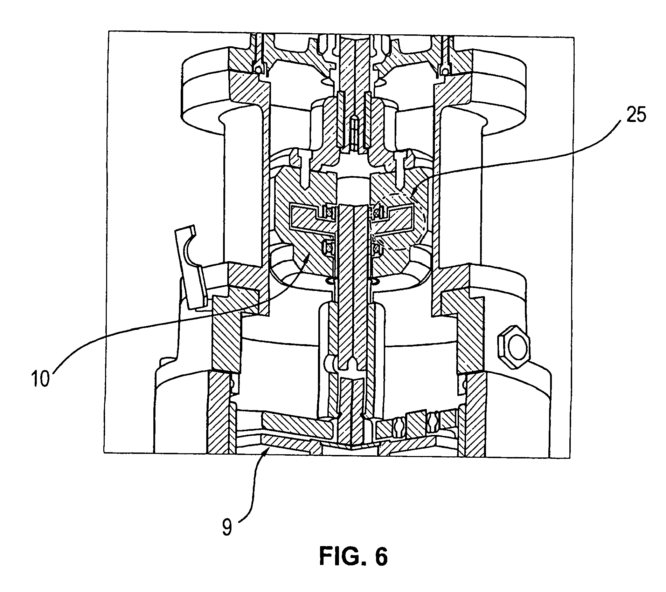

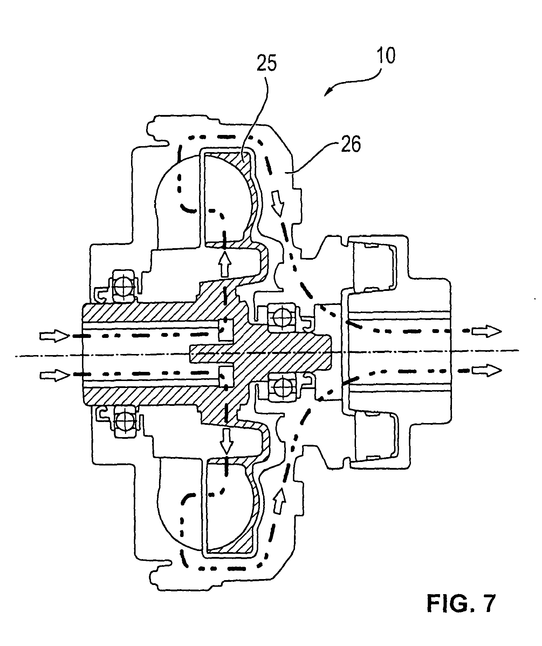

Eine alternative Ausführungsform der Erfindung zeigt Fig. 6, gemäß der die Außerbetriebs-Bremse 10 als Flüssigkeitskupplung bzw. Viskokupplung/-bremse ausgebildet ist, die ähnlich der zuvor dargestellten Fliehkraftbremse in das Drehwerk 6 integriert sein kann, insbesondere zwischen dem Antriebsmotor 7 und dem Drehwerksgetriebe 9. Wie Fig. 7 zeigt, kann die genannte Viskokupplung/-bremse ein Lamellenteil 25 umfassen, der eine Vielzahl eng nebeneinander sitzender Lamellen umfasst und in einem Gehäuseteil 26 drehbar aufgenommen ist. Die Verbindung und die Drehmomentübertragung erfolgt über eine Flüssigkeit, die sich im Hohlraum des Gehäuseteils 26 und in den Lamellen des Lamellenteils 25 befindet. Diese Flüssigkeit, in der Regel Öl, wird durch eine Relativdrehung von Lamellenteil 25 zu Gehäuseteil 26 und die daraus resultierende Fliehkraft nach außen in die Lamellen gedrückt. Durch die Drehung wird dabei auf die Lamellen des Gehäuses ein Druck ausgeübt, wobei sich das Gehäuseteil 26 mit zu drehen beginnt. Bei steigender Drehzahl und daraus steigender Fliehkraft wird der Widerstand gegenüber der Relativdrehung immer größer, d.h. die Drehzahlen der beiden Bauteile nähern sich immer mehr einander an.

Vorteilhafterweise wird dabei der Lamellenteil 25 an die Getriebewelle des Drehwerksgetriebes 9 angekoppelt, die zum Antriebsmotor 7 hin führt, wobei ggf. aber auch eine Ankupplung an andere Drehteile wie beispielsweise Getrieberäder erfolgen könnte.

Der Gehäuseteil 26 indes ist feststehend montiert bzw. im Außerbetriebs-Zustand des Krans rotatorisch festsetzbar. Dies kann in einfacher Weise dadurch erfolgen, dass der genannte Gehäuseteil 26 drehfest mit dem Antriebsmotor 7 gekoppelt ist, welcher im Außerbetriebs-Zustand wiederum durch die Betriebsbremse 8 des Drehwerks 6 festgesetzt sein kann. In diesem Fall kann eine Freistellvorrichtung zur Ermöglichung von Krandrehungen bei Wind eingespart werden bzw. darauf verzichtet werden, da die genannte Viskokupplung/-bremse die Windfreistellung ermöglicht.

Um im Kranbetrieb die genannte Viskokupplung/-bremse zu deaktivieren, können die Deaktivierungsmittel 11 einen Überbrücker 12 umfassen, der den Gehäuseteil 26 mit dem Lamellenteil 25 der Viskokupplung/-bremse rotatorisch sperrt, d.h. eine Relativdrehung von Rotor und Stator der Viskokupplung/-bremse verhindert. Dementsprechend wird das Drehmoment vom Antriebsmotor im Kranbetrieb direkt über die rotatorisch gesperrte Viskokupplung übertragen. Ein solcher Überbrücker 12 kann beispielsweise eine Schiebehülse 27 umfassen, die drehfest, jedoch axial verschieblich beispielsweise über ein Keilwellenprofil oder eine Verzahnung mit der Getriebewelle verbunden ist, mit der der Lamellenteil 25 gekoppelt ist. Wird die Schiebehülse 27 auf den Gehäuseteil 25 aufgefahren bzw. damit in drehfesten Eingriff gebracht, beispielsweise über entsprechende Verzahnungen, ist die Viskokupplung gesperrt und für den Kranbetrieb deaktiviert.

Der genannte Überbrücker 12 bildet also Verbindungsmittel 13 zur drehfesten Verbindung von Lamellenteil 25 mit dem Gehäuseteil 26.

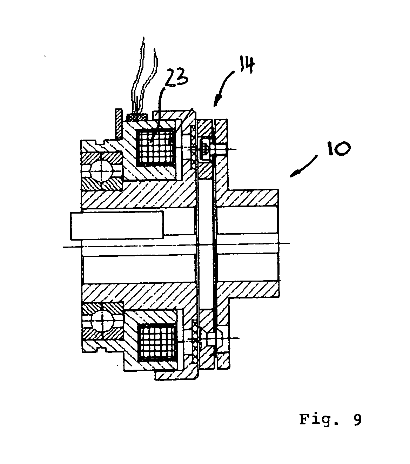

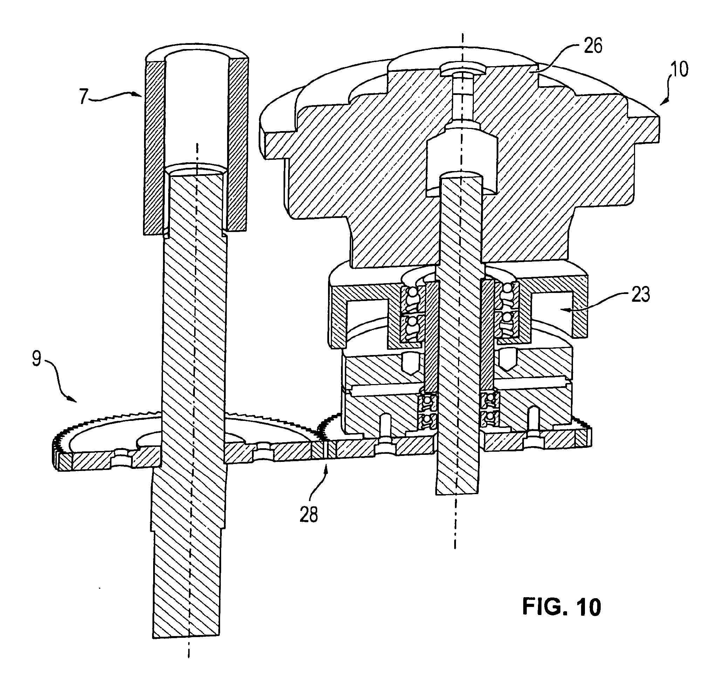

Anstelle einer solchen Schiebehülse 27 kann auch eine Axialkupplung 14 vorgesehen sein, um die Viskokupplung für den Kranbetrieb zu sperren, wie dies Fig. 9 zeigt. Ein axial verstellbaren Kupplungselement kann beispielsweise durch eine Federeinrichtung oder ein ähnliches Vorspannmittel in eine verriegelnde Stellung vorgespannt sein und durch einen Stellaktor beispielsweise in Form eines Elektromagneten 23 gelüftet werden, so dass die Viskokupplung nicht mehr gesperrt ist. Wie Fig. 10 zeigt, kann die Außerbetriebs-Bremse 10 beispielsweise in Form der beschriebenen Viskokupplung/-bremse auch nicht direkt in den Antriebsstrang des Drehwerks 6 zwischen Antriebsmotor 7 und Drehwerksgetriebe 9 integriert sein, sondern über eine Getriebeabzweigung parallel zum Antriebsmotor 7 an das Drehwerk 6 bzw. das Drehwerksgetriebe 9 angebunden sein, beispielsweise über das in Fig. 10 gezeigte Stirnradpaar 28, welches die Welle der Viskokupplung/-bremse bzw. deren Lamellenteil 25 antreibt. Der Gehäuseteil 26 kann wiederum rotatorisch festgesetzt sein. Um die Viskokupplung/-bremse für den Kranbetrieb deaktivieren zu können, kann ähnlich der zuvor beschriebenen Weise eine Kupplung 14, beispielsweise in Form einer Axialkupplung der vorbeschriebenen Art vorgesehen sein, mittels derer der Lamellenteil 25 bzw. die Viskokupplung/-bremse abgekuppelt werden kann, so dass sie sich auch bei Drehung des Drehwerks 6 nicht länger mitdreht.

## Patentansprüche

1. Kran, insbesondere Turmdrehkran, mit einem um eine aufrechte Drehachse (5) drehbar gelagerten Ausleger (3) sowie einer Außerbetriebs-Bremse (10), die Drehbewegungen des Auslegers (3) im Außerbetriebs-Zustand des Krans unter Windbelastungen zulässt und abbremst, **dadurch gekennzeichnet, dass** die Außerbetriebs-Bremse (10) drehgeschwindigkeitsabhängig arbeitend ausgebildet ist derart, dass das aufgebrachte Bremsmoment bei größerer Drehgeschwindigkeit des Krans größer ist als bei geringerer Drehgeschwindigkeit des Krans.

2. Kran nach dem vorhergehenden Anspruch, wobei die Außerbetriebs-Bremse (10) derart ausgebildet ist, dass das Bremsmoment bis zu einer vorbestimmten Drehgeschwindigkeit des Auslegers (3) null oder zumindest kleiner als ein vorbestimmtes Drehmoment ist, das durch eine vorbestimmte Windbelastung auf den Kran erzeugbar ist, und erst bei Überschreiten der genannten Drehgeschwindigkeit des Auslegers (3) größer als das durch die genannte Windbelastung auf den Kran erzeugbare Drehmoment ist.

3. Kran nach einem der vorhergehenden Ansprüche, wobei die Außerbetriebs-Bremse (10) derart ausgebildet ist, dass das Bremsmoment mit zunehmender Drehgeschwindigkeit des Auslegers (3) kontinuierlich und/oder stufenweise ansteigt.

4. Kran nach einem der vorhergehenden Ansprüche, wobei die Außerbetriebs-Bremse (10) fremdenergiefrei selbstbetätigend und/oder stromlos arbeitend ausgebildet ist.

5. Kran nach einem der vorhergehenden Ansprüche, wobei die Außerbetriebs-Bremse (10) eine Fliehkraftbremse umfasst, die eine feststehend montierte und/oder festsetzbare Bremstrommel und bei Drehbewegungen des Auslegers (3) rotierende Fliehgewichte umfasst, die mit Bremsbelägen verbunden sind, die gegen die Bremstrommel drückbar sind.

6. Kran nach einem der vorhergehenden Ansprüche, wobei die Außerbetriebs-Bremse (10) eine Viskokupplung/-bremse umfasst, die einen feststehend montierten oder festsetzbaren Gehäuseteil und einen bei Drehbewegungen des Auslegers (3) rotierenden Lamellenteil umfasst.

7. Kran nach einem der vorhergehenden Ansprüche, wobei Deaktivierungsmittel (11) zum Deaktivieren der Außerbetriebs-Bremse (10) im Kranbetrieb vorgesehen sind.

8. Kran nach dem vorhergehenden Anspruch, wobei die als Viskokupplung/- bremse ausgebildete Außerbetriebs-Bremse (10) in den Antriebsstrang des Drehwerks (6), vorzugsweise zwischen einem Antriebsmotor (7) und einem Drehwerksgetriebe (9), integriert ist, wobei die Deaktivierungsmittel (11) einen Überbrücker (12) zum Überbrücken der Außerbetriebs-Bremse (10) und/oder rotatorischen Sperren der relativ zueinander verdrehbaren Teile der Viskokupplung/-bremse aufweisen, wobei der Überbrücker (12) Verbindungsmittel (13), vorzugsweise in Form einer verzahnten Schiebehülse und/oder eines Magnetkupplungsteils, zum drehfesten Verbinden von Eingangs- und Abtriebsteilen der Viskokupplung/-bremse umfasst.

9. Kran nach Anspruch 7, sofern vom Anspruch 6 abhängig oder nach Anspruch 8, wobei ein Gehäuseteil (26) der Viskokupplung/-bremse (10) drehfest mit einem Antriebsmotor (7) des Drehwerks (6) gekoppelt ist, welcher von einer Betriebsbremse (8) im Außerbetriebs-Zustand festgesetzt werden kann, wobei das Drehwerk (6) frei von einer Freistellungsvorrichtung zum Freistellen der Betriebsbremse (8) ausgebildet ist.

10. Kran nach einem der Ansprüche 7 bis 9, wobei die Deaktivierungsmittel (11) eine Kupplung (14) zum Abkuppeln zumindest eines Teils der Außerbetriebs-Bremse (10) vom Antriebsstrang des Drehwerks (6) und/oder zum Abkuppeln eines rotatorisch festsetzbaren Bremsenteils von einem drehfesten Basisteil aufweisen.

11. Kran nach einem der Ansprüche 7 bis 10, wobei die Deaktivierungsmittel (11) eine Bremssperre (15) zum Sperren eines beweglichen Bremsenteils der als Fliehkraftbremse ausgebildeten Außerbetriebs-Bremse (10) und/oder Axialstellmittel zum axialen Verstellen eines Bremsenteils der als Fliehkraftbremse ausgebildeten Außerbetriebs-Bremse (10) in eine Nichteingriffsstellung aufweisen.

12. Kran nach einem der vorhergehenden Ansprüche, wobei die Außerbetriebs-Bremse (10) zusätzlich zu einer Drehwerks-Betriebsbremse (8), die zum Abbremsen der Drehbewegung des Auslegers (3) im Kranbetrieb bestimmt ist, vorgesehen ist.

13. Kran nach dem vorhergehenden Anspruch, wobei die Außerbetriebs-Bremse (10) ein Bremsmoment aufbringt, das kleiner ist als das maximale Bremsmoment der Drehwerks-Betriebsbremse (8), vorzugsweise etwa 30% bis 70%, insbesondere etwa 40% bis 60% des maximalen Bremsmoments der Drehwerks-Betriebsbremse (8) beträgt.

14. Kran nach einem der vorhergehenden Ansprüche, wobei die Außerbetriebs-Bremse (10) auf einer Eingangsseite eines Drehwerksgetriebes (9) an den Antriebsstrang des Drehwerks (6), der von einem Drehantrieb (7) zu einem Ausgangselement des Drehwerks (6) führt, angebunden, insbesondere zwischen dem Antriebsmotor (7) und einem Eingangselement des Drehwerksgetriebs (9) vorgesehen ist.

15. Kran nach einem der vorhergehenden Ansprüche, wobei die Außerbetriebs-Bremse (10) in den Kraft übertragenden Antriebsstrang des Drehwerks (6) integriert ist oder über eine Getriebeabzweigung an das Drehwerksgetriebe (9) angebunden und/oder zum Antriebsmotor (7) des Drehwerks (6) parallel angeordnet ist.

## Claims

1. A crane, in particular a tower crane, with a boom (3) rotatably mounted about an upright axis of rotation (5) and an out-of-service brake (10) which permits and slows down the rotary movements of the boom (3) in the out-of-service condition of the crane under wind loads, **characterized in that** the out-of-service brake (10) is formed to operate in a rotational-speed-dependent manner such that the applied braking torque is greater at a greater rotational speed of the crane than at a lower rotational speed of the crane.

2. The crane according to the preceding claim, wherein the out-of-service brake (10) is formed such that up to a predetermined rotational speed of the boom (3) the braking torque is zero or at least smaller than a predetermined torque, which can be generated by a predetermined wind load on the crane, and only upon exceedance of said rotational speed of the boom (3) is greater than the torque to be generated by said wind load on the crane.

3. The crane according to any of the preceding claims, wherein the out-of-service brake (10) is formed such that with increasing rotational speed of the boom (3) the braking torque rises continuously and/or incrementally.

4. The crane according to any of the preceding claims, wherein the out-of-service brake (10) is formed to operate in a self-applying manner free from external energy and/or currentless.

5. The crane according to any of the preceding claims, wherein the out-of-service brake (10) comprises a centrifugal brake which comprises a fixedly mounted and/or fixable brake drum and flyweights rotating with rotary movements of the boom (3), which are connected with brake pads which can be urged against the brake drum.

6. The crane according to any of the preceding claims, wherein the out-of-service brake (10) comprises a viscous clutch/brake which comprises a fixedly mounted or fixable housing part and a disk part rotating with rotary movements of the boom (3).

7. The crane according to any of the preceding claims, wherein deactivation means (11) are provided for deactivating the out-of-service brake (10) in crane operation.

8. The crane according to the preceding claim, wherein the ouf-of-service brake (10) formed as viscous clutch/brake is integrated into the drive train of the slewing gear (6), preferably between a drive motor (7) and a slewing gear transmission (9), wherein the deactivation means (11) include a jumper (12) for bridging the out-of-service brake (10) and/or rotatorily blocking the parts of the viscous clutch/brake rotatable relative to each other, wherein the jumper (12) comprises connecting means (13), preferably in the form of a toothed sliding sleeve and/or a magnetic coupling part, for non-rotatably connecting input and output parts of the viscous clutch/brake.

9. The crane according to claim 7, as far as dependent on claim 6, or according to claim 8, wherein a housing part (26) of the viscous clutch/brake (10) is non-rotatably coupled with a drive motor (7) of the slewing gear (6), which can be fixed in the out-of-service condition by a service brake (8), wherein the slewing gear (6) is formed free from a release device for releasing the service brake (8).

10. The crane according to any of claims 7 to 9, wherein the deactivation means (11) include a coupling (14) for decoupling at least a part of the out-of-service brake (10) from the drive train of the slewing gear (6) and/or for decoupling a rotatorily fixable brake part from a non-rotatable base part.

11. The crane according to any of claims 7 to 10, wherein the deactivation means (11) include a brake lock (15) for blocking a movable brake part of the out-of-service brake (10) formed as centrifugal brake and/or axial positioning means for axially shifting a brake part of the out-of-service brake (10) formed as centrifugal brake into a non-engagement position.

12. The crane according to any of the preceding claims, wherein the out-of-service brake (10) is provided in addition to a slewing gear service brake (8), which is determined for slowing down the rotary movement of the boom (3) in crane operation.

13. The crane according to the preceding claim, wherein the out-of-service brake (10) applies a braking torque which is smaller than the maximum braking torque of the slewing gear service brake (8), preferably amounts to about 30% to 70%, in particular about 40% to 60% of the maximum braking torque of the slewing gear service brake (8).

14. The crane according to any of the preceding claims, wherein on an input side of a slewing gear transmission (9) the out-of-service brake (10) is connected to the drive train of the slewing gear (6), which leads from a slewing drive (7) to an output element of the slewing gear (6), in particular is provided between the drive motor (7) and an input element of the slewing gear transmission (9).

15. The crane according to any of the preceding claims, wherein the out-of-service brake (10) is integrated into the power-transmitting drive train of the slewing gear (6) or is connected to the slewing gear transmission (9) via a transmission branch and/or is arranged parallel to the drive motor (7) of the slewing gear (6).

## Revendications

1. Grue, en particulier grue pivotante sur pylône, comportant une flèche (3) montée rotative autour d'un axe de rotation vertical (5) ainsi qu'un frein hors service (10), qui autorise et freine les mouvements de rotation de la flèche (3) dans l'état hors service de la grue en cas de prise au vent, **caractérisée en ce que** le frein hors service (10) est réalisé de manière à fonctionner en fonction de la vitesse de rotation de telle manière que le couple de freinage appliqué en cas de vitesses de rotation élevées est supérieur au couple de freinage appliqué en cas de vitesse de rotation réduite de la grue.

2. Grue selon la revendication précédente, le frein hors service (10) . étant réalisé de telle manière que le couple de freinage est, jusqu'à une vitesse de rotation prédéterminée de la flèche (3), nul ou au moins inférieur à un couple de rotation prédéterminé, qui peut être généré par une prise au vent prédéterminée sur la grue, et n'est supérieur au couple de rotation pouvant être généré sur la grue par la prise au vent mentionnée qu'en cas de dépassement de la vitesse de rotation mentionnée de la flèche (3).

3. Grue selon l'une des revendications précédentes, le frein hors service (10) étant réalisé de telle manière que le couple de freinage augmente en continu et/ou graduellement avec la vitesse de rotation croissante de la flèche (3).

4. Grue selon l'une des revendications précédentes, le frein hors service (10) étant réalisé de manière autonome sans source d'énergie et/ou fonctionnant sans courant.

5. Grue selon l'une des revendications précédentes, le frein hors service (10) comprenant un frein centrifuge, qui comprend un tambour de frein monté fixe et/ou pouvant être fixé et des masselottes centrifuges tournant en cas de mouvements de rotation de la flèche (3), qui sont reliées à des plaquettes de frein qui peuvent être pressées contre le tambour de frein.

6. Grue selon l'une des revendications précédentes, le frein hors service (10) comprenant un accouplement/frein visqueux, qui comprend une pièce de boîtier montée fixe ou pouvant être fixée et un élément de lamelles tournant en cas de mouvements de rotation de la flèche (3).

7. Grue selon l'une des revendications précédentes, des moyens de désactivation (11) étant prévus pour désactiver le frein hors service (10) lors du fonctionnement de la grue.

8. Grue selon la revendication précédente, le frein hors service (10) réalisé sous la forme d'accouplement/frein visqueux étant intégré dans la chaîne cinématique du dispositif de rotation (6), préférentiellement entre un moteur d'entraînement (7) et un système de transmission du dispositif de rotation (9), les moyens de désactivation (11) présentant un cavalier (12) pour ponter le frein hors service (10) et/ou pour le verrouillage en rotation des éléments tournant les uns par rapport aux autres de l'accouplement/frein visqueux, le cavalier (12) comprenant des moyens de connexion (13), préférentiellement sous la forme d'un manchon à sertir denté et/ou d'une pièce d'accouplement magnétique, pour la connexion fixe en rotation d'éléments d'entrée et de sortie de l'accouplement/frein visqueux.

9. Grue selon la revendication 7, si elle est dépendante de la revendication 6 ou selon la revendication 8, une pièce de boîtier (26) de l'accouplement/frein visqueux (10) étant accouplée de manière fixe en rotation à un moteur d'entraînement (7) du dispositif de rotation (6), qui peut être réglée fixe à l'état hors service par un frein de service (8), le dispositif de rotation (6) étant réalisé exempt de dispositif de libération pour relâcher le frein de service (8).

10. Grue selon l'une des revendications 7 à 9, les moyens de désactivation (11) présentant un accouplement (14) pour désaccoupler au moins une partie du frein hors service (10) de la chaîne cinématique du dispositif de rotation (6) et/ou pour désaccoupler une pièce de freinage pouvant être réglée fixe en rotation d'une pièce de base fixe en rotation.

11. Grue selon l'une des revendications 7 à 10, les moyens de désactivation (11) présentant un verrouillage de freinage (15) pour verrouiller une pièce de freinage mobile du frein hors service (10) réalisée sous forme de frein centrifuge et/ou des moyens axiaux pour régler axialement une pièce de freinage du frein hors service (10) réalisée sous forme de frein centrifuge dans une position non engagée.

12. Grue selon l'une des revendications précédentes, le frein hors service (10) étant également pourvu d'un frein de service du dispositif de rotation (8), qui est destiné au freinage du mouvement de rotation de la flèche (3) lors du fonctionnement de la grue.

13. Grue selon la revendication précédente, le frein hors service (10) appliquant un couple de freinage qui est inférieur au couple de freinage maximal du frein de service du dispositif de rotation (8), représentant préférentiellement approx. 30 % à 70 %, en particulier approx. 40 % à 60 % du couple de freinage maximal du frein de service du dispositif de rotation (8).

14. Grue selon l'une des revendications précédentes, le frein hors service (10) étant raccordé sur le côté entrée d'un dispositif de rotation (9) au niveau de la chaîne cinématique du dispositif de rotation (6), qui mène d'un entraînement en rotation (7) à un élément de sortie du dispositif de rotation (6), prévu en particulier entre le moteur d'entraînement (7) et un élément d'entrée du dispositif de rotation (9).

15. Grue selon l'une des revendications précédentes, le frein hors service (10) étant intégré dans la chaîne cinématique du dispositif de rotation (6) transmettant la force ou étant raccordé par l'intermédiaire d'un embranchement de transmission au système de transmission du dispositif de rotation (9) et/ou disposé parallèle au moteur d'entraînement (7) du dispositif de rotation (6).
